Europäisches Patentamt

European Patent Office

Office européen des brevets

(19)

(11) Veröffentlichungsnummer : **0 026 939**
**B1**

(12) **EUROPÄISCHE PATENTSCHRIFT**

(45) Veröffentlichungstag der Patentschrift :
**11.04.84**

(21) Anmeldenummer : **80106113.6**

(22) Anmeldetag : **08.10.80**

(51) Int. Cl.³ : **D 06 F 75/26**, D 06 F 75/24 //
**G05D23/08, H05B3/68**

(54) **Speicher-Bügeleisen.**

(43) Veröffentlichungstag der Anmeldung :
**15.04.81 Patentblatt 81/15**

(45) Bekanntmachung des Hinweises auf die Patenterteilung : **11.04.84 Patentblatt 84/15**

(84) Benannte Vertragsstaaten :
**AT BE CH DE FR GB IT LI NL SE**

(56) Entgegenhaltungen :
**CH-A- 560 033**
**DE-B- 1 055 646**
**DE-B- 1 130 405**
**FR-A- 1 166 319**
**GB-A- 568 396**
**GB-A- 1 026 882**
**US-A- 1 649 506**
**US-A- 2 898 905**
**US-A- 2 945 928**

(73) Patentinhaber : **Antimovski, Antim**
**u/ "Osio"**
**91000 Skopje (YU)**

(72) Erfinder : **Antimovski, Antim**
**u/ "Osio"**
**91000 Skopje (YU)**

(74) Vertreter : **Behn, Klaus, Dipl.-Ing.**
**Dipl.-Ing. Klaus Behn Dipl.-Phys. Robert Münzhuber**
**Patentanwälte Widenmayerstrasse 6**
**D-8000 München 22 (DE)**

Jouve, 18, rue St-Denis, 75001 Paris, France

## Speicher-Bügeleisen

Die Erfindung betrifft ein Speicher-Bügeleisen mit einer Bodenplatte und einer Schutzkappe, mit einem von der Bodenplatte getrennt angeordneten Wärmespeicher und mit einem von der Temperatur der Bodenplatte beeinflußten Temperaturregler, welcher den Wärmeübergangswiderstand zwischen Wärmespeicher und Bodenplatte durch Bewegung des Wärmespeichers relative zur Bodenplatte verändert.

Es ist ein Speicher-Bügeleisen der vorgenannten Art bekannt (GB-PS 1 026 882), bei dem zwischen Wärmespeicher und Bodenplatte keinerlei Wärmeisolation vorgesehen ist. Infolgedessen kann bei dem bekannten Bügeleisen der Wärmespeicher nur auf eine Temperatur aufgeheizt werden, die nicht wesentlich über der zulässigen Betriebstemperatur der Bodenplatte liegt, da anderenfalls das Bügeleisen eine zu hohe Temperatur annehmen würde oder unhandliche Abmessungen erhalten müßte. Infolge der Begrenzung der Temperatur des Wärmespeichers ist die Speicherkapazität vergleichsweise gering.

Der Erfindung liegt die Aufgabe zugrunde, ein Speicher-Bügeleisen der genannten Art zu schaffen, das bei kleinen Abmessungen eine große Speicherkapazität besitzt. Dies wird erfindungsgemäß dadurch erreicht, daß die Bügeleisen-Schutzkappe mit der Bodenplatte luftdicht verbunden ist, daß eine Vorrichtung zum Evakuieren des Innenraumes vorgesehen ist, daß zwischen Wärmespeicher und Bodenplatte eine Abschirmung gegen die Wärmestrahlung vorgesehen ist und daß die Bodenplatte mit gegen den Wärmespeicher gerichteten Vorsprüngen versehen ist, welche die Abschirmung durchsetzen und als Kontaktflächen zwischen Wärmespeicher und Bodenplatte dienen.

Hierdurch wird wirksam ein Wärmeübergang zwischen Wärmespeicher und Bodenplatte bzw. Schutzkappe sowohl durch Konvektion als auch durch Wärmestrahlung vermieden, so daß auch bei verhältnismäßig kleinen Abmessungen des Bügeleisens der Wärmespeicher auf eine hohe Temperatur aufgeheizt werden kann, so daß dieser Wärmespeicher eine vergleichsweise große Speicherkapazität hat.

Vorzugsweise ist der Temperaturregler ein an der Bodenplatte befestigtes Bimetallplättchen.

Der Temperaturregler kann eine Schnappvorrichtung enthalten, mit welcher der Wärmespeicher in zwei stabile Lagen bringbar ist.

Zweckmäßig ist eine Vorrichtung vorgesehen, welche nach Speicherung einer einstellbaren Wärmemenge ein mit der Netzzuleitung verbundenes Anschlußelement vom Speicher-Bügeleisen trennt.

Zur Kontrolle der in dem Wärmespeicher gespeicherten Wärmemenge kann eine von der Temperatur des Wärmespeichers stetig auslenkbare Bimetallfeder vorgesehen sein, wobei eine die von der Temperatur abhängige Stellung der Bimetallfeder anzeigende magnetische Anzeigevorrichtung vorgesehen ist.

Auch zwischen Schutzkappe und Wärmespeicher kann eine Abschirmung gegen Wärmestrahlung vorgesehen sein. Die Abschirmung gegen die Wärmestrahlung kann beispielsweise aus Folien bestehen.

Durch die mögliche Aufheizung des Wärmespeichers auf vergleichsweise sehr hohe Temperatur und die dadurch ermöglichte Speicherung einer großen Wärmemenge ist ein Bügeln über einen längeren Zeitraum möglich, ohne daß das Bügeleisen mit einer Stromquelle verbunden werden muß.

Die Erfindung ist im folgenden anhand der Zeichnung an Ausführungsbeispielen der Erfindung näher erläutert. In der Zeichnung zeigen :

Figur 1 ein Ausführungsbeispiel der Erfindung in einer Seitenansicht, und zwar in einem Längsschnitt,

Figur 2 eine Einzeldarstellung eines elektrischen Anschlußstückes für das erfindungsgemäße Bügeleisen,

Figur 3 eine Einzeldarstellung des Anschlußendes des erfindungsgemäßen Bügeleisens mit einer Vorrichtung für die Einstellung der im Speicherelement zu speichernden Wärmemenge und

Figur 4 eine Einzeldarstellung der Einstellvorrichtung bzw. Anzeigevorrichtung für die zu speichernde bzw. gespeicherte Wärmemenge.

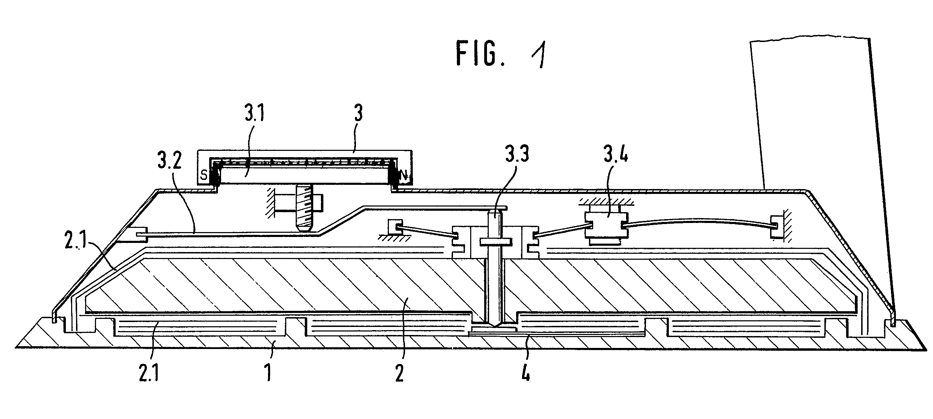

Fig. 1 zeigt eine Ausführungsform des erfindungsgemäßen Speicher-Bügeleisens. Die Bodenplatte 1 ist mit einzelnen Vorsprüngen versehen, auf denen der Wärmespeicher 2 aufliegen kann. Die Schutzkappe ist mit der Bodenplatte 1 luftdicht verbunden. Die Schutzkappe ist mit einer Vorrichtung zum Evakuieren des Innenraumes versehen. Durch die Evakuierung wird die Wärmeisolierung zwischen Wärmespeicher und Bodenplatte 1 bzw. Schutzkappe verbessert. Außerdem ist der Wärmespeicher noch von Folien 2.1 umgeben, welche die Wärmestrahlung abschirmen.

Der Wärmespeicher 2 ist auf die Bodenplatte 1 zu und von dieser weg bewegbar. Sie ist bei 3.4 mit Hilfe einer Schnappvorrichtung aufgehängt, die zwei stabile Lagen des Wärmespeichers 2 ermöglicht.

Mit 4 ist ein Bimetall-Plättchen bezeichnet, das von der Temperatur der Bodenplatte beeinflußt ist. 3.2 ist eine Feder. Zwischen Feder 3.2 und Bimetall-Element ist ein Element 3.3 aus einem wärmeisolierenden, hochtemperaturfesten Material angeordnet.

Bei Erwärmung der Bodenplatte 1 biegt sich das Bimetall-Element 4 nach oben, wodurch der Wärmespeicher 2 angehoben wird. Gleichzeitig wird das Element 3.3 entgegen der Kraft der Feder 3.2 angehoben. Bei Berührung des Bimetall-Elements mit dem Wärmespeicher 2 wird dieses plötzlich stark erhitzt, wodurch der Wärmespeicher 2 schnell angehoben wird und das Schnappelement nach oben durchschnappt, so daß sich der Wärmespeicher in seiner oberen Lage befindet, in der er von dem Bimetall-Plättchen 4 abgehoben ist.

Bei Abkühlung der Bodenplatte 1 biegt sich das Bimetallelement 4 zurück, wodurch auch das Element 3.3 nach unten bewegt wird. Mit dem in der Zeichnung dargestellten Bund legt sich das Element 3.3 von oben gegen den Wärmespeicher 2, der durch die Kraft der Feder 3.2 nach unten gedrängt wird, wodurch die Schnappvorrichtung sich nach unten bewegt. Der gleiche Vorgang beginnt dann wieder von neuem.

Zweckmäßig besteht die Schutzkappe aus einem nichtmagnetischem Material, so daß ein Temperaturwähler 3 und 3.1 mit magnetischer Kraftübertragung verwendet werden kann, der irgendwelche Durchbrechungen in der Schutzkappe nicht erfordert. Durch den Temperaturwähler wird die Vorspannung der Feder 3.2 beeinflußt und damit die Arbeitstemperatur festlegt.

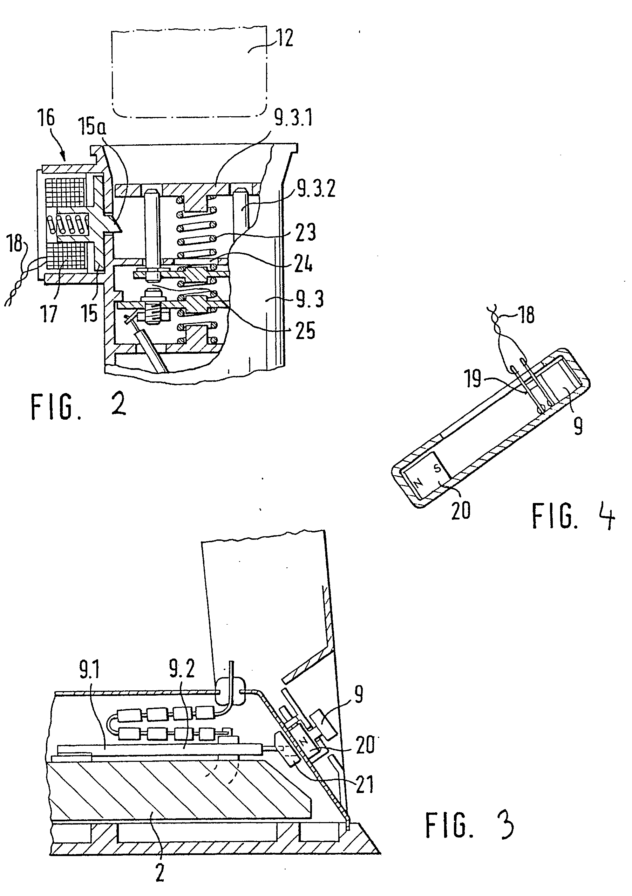

In Fig. 2 ist eine Steckervorrichtung 9.3 für das erfindungsgemäße Bügeleisen gezeigt 9.3.2 sind die Steckerstifte. In der Vorrichtung ist eine verschiebbare Platte 9.3.1 vorgesehen, die durch eine Feder 23 in der gezeigten Lage gehalten wird. Bei Einführen in die Steckdose 12 wird die Platte 9.3.1 entgegen der Wirkung der Feder 23 bewegt, bis ein Ansatz der Platte durch eine Öffnung 24 greift und die Kontakte 25 betätigt, wodurch der Heizstromkreis eingeschaltet wird. Die Platte 9.3.1 wird in dieser Lage von der Nase 15a eines Angriffs 15 hintergriffen und in dieser Lage festgehalten. Der Angriff 15 kann durch Erregung der Spule 17 über die Leitung 18 zurückgezogen werden, wodurch die Platte 9.3.1 freigegeben und durch die Feder 23 in ihre Ausgangslage gedrängt wird.

In Fig. 3 ist oberhalb des Wärmespeichers 2 eine Bimetallfeder 9.2 gezeigt, die durch die Warme des Wärmespeichers 2 beeinflußt wird. Die Bimetallfeder 9.2. trägt an ihrem freien Ende einen ferromagnetischen Körper 21. Die Feder 9.2 wird bei Erwärmung ausgelenkt, so daß sich der ferromagnetische Körper 21 entlang der Rückwand des Bügeleisens bewegt. Dadurch wird ein außerhalb der Schutzkappe angeordneter Magnet 20 mitgezogen, dessen Stellung damit die in den Wärmespeicher eingespeicherte Wärmemenge anzeigt. Die Kontakte 19 (Fig. 4) können durch den Magneten 20 betätigt werden. Dadurch wird die Spule 17 erregt und die Verbindung des Steckers 9.3 mit der Steckdose 12 gelöst. Die Kontakte 19 können mit Hilfe eines Handgriffes 9 verschoben werden, wodurch die in das Bügeleisen einspeicherbare Wärmemenge einstellbar ist.

## Ansprüche

1. Speicher-Bügeleisen mit einer Bodenplatte und einer Schutzkappe, mit einem von der Bodenplatte getrennt angeordneten Wärmespeicher und mit einem von der Temperatur der Bodenplatte beeinflußten Temperaturregler, welcher den Wärmeübergangswiderstand zwischen Wärmespeicher und Bodenplatte durch Bewegung des Wärmespeichers relativ zur Bodenplatte verändert, dadurch gekennzeichnet, daß die Bügeleisen-Schutzkappe mit der Bodenplatte (1) luftdicht verbunden ist, daß eine Vorrichtung zum Evakuieren des Innenraumes vorgesehen ist, daß zwischen Wärmespeicher (2) und Bodenplatte (1) eine Abschirmung gegen die Wärmestrahlung vorgesehen ist und daß die Bodenplatte (1) mit gegen den Wärmespeicher (2) gerichteten Vorsprüngen versehen ist, welche die Abschirmung (2.1) durchsetzen und als Kontaktflächen zwischen Wärmespeicher (2) und Bodenplatte (1) dienen.

2. Speicher-Bügeleisen nach Anspruch 1, dadurch gekennzeichnet, daß der Temperaturregler ein an der Bodenplatte (1) befestigtes Bimetallplättchen (4) ist.

3. Speicher-Bügeleisen nach Anspruch 1 oder 2, dadurch gekennzeichnet, daß der Temperaturregler eine Schnappvorrichtung (3.3, 3.4) enthält, mit welcher der Wärmespeicher (2) in zwei stabile Lagen bringbar ist.

4. Speicher-Bügeleisen nach Anspruch 1 oder 2, dadurch gekennzeichnet, daß eine Vorrichtung 15-17, 23, 9.3.1) vorgesehen ist, welche nach Speicherung einer einstellbaren Wärmemenge ein mit der Netzzuleitung verbundenes Anschlußelement (12) vom Speicher-Bügeleisen trennt (Fig. 2-4).

5. Speicher-Bügeleisen nach Anspruch 1 oder 2, dadurch gekennzeichnet, daß zur Kontrolle der in dem Wärmespeicher (2) gespeicherten Wärmemenge eine von der Temperatur des Wärmespeichers stetig auslenkbare Bimetallfeder (9.2) vorgesehen ist und daß eine die von der Temperatur abhängige Stellung der Bimetallfeder (9.2) anzeigende magnetische Anzeigevorrichtung (20) vorgesehen ist.

6. Speicher-Bügeleisen nach Anspruch 1, dadurch gekennzeichnet, daß auch zwischen Schutzkappe und Wärmespeicher (2) eine Abschirmung (2.1) gegen Wärmestrahlung vorgesehen ist.

7. Speicher-Bügeleisen nach Anspruch 1 oder 6, dadurch gekennzeichnet, daß die Abschirmung gegen die Wärmestrahlung aus Folien (2.1) besteht.

## Claims

1. Heat storage iron with a base plate and a protective cap, with a heat store being arranged to be separated from the base plate and a temperature regulator which is influenced by the temperature of the base plate and which changes the heat transfer resistance between the heat store and the base plate by movement of the heat store relative to the base plate, characterised in that the iron protective cap is connected in airtight manner to the base plate (1), that there is provided a device for evacuating the inner chamber, that there is provided a shielding (2.1) against heat radiation between said heat store (2) and said base plate (1) and that the base plate (1) is provided with projections directed against said heat store, whereby said projections penetrate said shielding (2.1) and serve as contact surfaces between heat store (2) and base plate (1).

2. Heat storage iron according to claim 1, characterised in that the temperature regulator is a bimetal plate (4) being secured at said base plate (1).

3. Heat storage iron according to claim 1 or 2, characterised in that said temperature regulator comprises a snap mechanism (3.3, 3.4) with which said heat storage (2) can be moved in two positions.

4. Heat storage iron according to claim 1 or 2, characterised in that there is provided a device (15-17, 23, 9.3.1) which disconnects a connection element (12) connected to the energy supply from said heat storage iron after storing an adjustable amount of heat (Fig. 2-4).

5. Heat storage iron according to claim 1 or 2, characterised in that for the control of the amount of heat being stored in said heat store (2) there is provided a bimetal spring (9.2) being continuously deflectable by the temperature of said heat store, and in that there is provided a magnetic indicating device (20) indicating the position of said bimetal spring (9.2) being dependent on the temperature.

6. Heat storage iron according to claim 1, characterised in that there is provided a shielding (2.1) against heat radiation between said protective cap and that heat storage, too.

7. Heat storage iron according to claim 1 or 6, characterised in that said shielding against heat radiation consists of foils (2.1).


**Revendications**

1. Fer à repasser à accumulation comprenant une semelle et un capot de protection, avec un accumulateur de chaleur qui est monté indépendamment de la semelle et avec un régulateur de température qui est sensible à la température de la semelle et qui fait varier la résistance à la transmission de chaleur entre accumulateur de chaleur et semelle en déplaçant l'accumulateur de chaleur par rapport à la semelle, caractérisé en ce que le capot de protection du fer à repasser se raccorde à la semelle (1) de manière étanche à l'air, en ce qu'il est prévu un dispositif pour créer le vide dans le volume intérieur, en ce qu'il est prévu, entre l'accumulateur de chaleur (2) et la semelle (1), un écran contre le rayonnement calorifique et en ce que la semelle (1) est munie de saillies (5) qui sont dirigées vers l'accumulateur de chaleur, traversent l'écran (2.1) et servent de surfaces de contact entre l'accumulateur de chaleur (2) et la semelle (1).

2. Fer à repasser à accumulation selon la revendication 1, caractérisé en ce que le régulateur de température est une plaquette de bimétal (4) fixée à la semelle (1).

3. Fer à repasser à accumulation selon la revendication 1 ou 2, caractérisé en ce que le régulateur de température comporte un dispositif à déclenchement brusque (3.3, 3.4), par lequel l'accumulateur de chaleur (2) peut être mis dans deux positions stables.

4. Fer à repasser à accumulation selon la revendication 1 ou 2, caractérisé en ce qu'il est prévu un dispositif (15-17, 23, 9.3.1) qui, à la suite de l'accumulation d'une quantité de chaleur réglable, sépare du fer à repasser à accumulation un élément de connexion (12) raccordé au conducteur branché sur le réseau (fig. 2-4).

5. Fer à repasser à accumulation selon la revendication 1 ou 2, caractérisé en ce que, pour le contrôle de la quantité de chaleur accumulée dans l'accumulateur de chaleur (2), il est prévu un ressort de bimétal (9.2) qui peut être déformé de façon progressive par la température de l'accumulateur de chaleur, et en ce qu'il est prévu un dispositif indicateur (20) magnétique qui indique la position du ressort de bimétal (9.2) dépendant de la température.

6. Fer à repasser à accumulation selon la revendication 1, caractérisé en ce qu'il est également prévu, entre le capot de protection et l'accumulateur de chaleur (2), un écran (2.1) contre le rayonnement calorifique.

7. Fer à repasser à accumulation selon la revendication 1 ou 6, caractérisé en ce que l'écran contre le rayonnement calorifique est constitué par des feuilles métalliques minces.

FIG. 1

FIG. 2

FIG. 4

FIG. 3